# EUROPEAN PATENT APPLICATION

(11) **EP 2 977 977 A1**
(43) Date of publication of application: **27.01.2016**
(21) Application number: 14178231.8
(22) Date of filing: 23.07.2014
(51) Int. Cl.: G09B 23/30

(54) **A composite structure for medical training and production method thereof**

(71) Applicant: Sabanci Üniversitesi, 34956 Istanbul (TR)
(72) Inventor: Akbulut, Özge, 34956 Istanbul (TR); Eldem, Barkin, 34740 Istanbul (TR); Budak, Ece Polen, 34956 Istanbul (TR); Avci, Gökay, 34956 Istanbul (TR); Özbay, Ceren, 34956 Istanbul (TR)
(74) Representative: Sevinç, Erkan

(57) **Abstract**

The present invention proposes a composite structure (1) for medical training, comprising a silicone-based main body, and a first layer (3) of silicone-based coating at least partly covering said main body (2), wherein said silicone-based main body (2) is at least partly in form of foam having an average pore size between 0.1 cm and 1 cm. Also a method for obtainment of such composite structure is proposed.

## Description

### Technical Field of the Invention

The present invention relates to a composite structure and a method for preparation thereof.

### Background of the Invention

Surgeons-in-training practice and improve their skills on cadavers, but due to the increasing figure of medical students, the demand on cadavers is rising. However, the number of cadavers is failing to meet this demand, and surgery experts are concerned that insufficient training of surgeons due to the short supply in cadavers may result in fatal mistakes.

Sophisticated synthetic body parts e.g. tissues or organs mimicking the mechanical, physical and optical properties of human might be a solution of the above concern. Yet, the main problem in artificial body parts is difficulties and insufficiency in meeting any realistic sensation that a surgeon experiences in palpation, cutting, suturing, etc. For instance, some model breasts for surgery training are filled with polyurethane, which is harder and also difficult to cut compared to a real human breast, thus they are far from providing the real sensation to the surgeons whilst performing training-based operations thereon. Additionally, the optical/cosmetic properties of artificial body parts such as shape, color and texture are also insufficient to provide realistic training experience.

Hence, there is a need to overcome these shortcomings by providing an artificial body part which realistically mimics the mechanical and optical properties of a live human body part which is either healthy or ailing, e.g. a breast with or without a tumor/gland/vesicle, which is superficial or not. Also a method for obtainment of such artificial body parts is needed.

### Objects of the Invention

Primary object of the present invention is to eliminate the above-mentioned shortcomings in the prior art.

A further object of the present invention is to provide a composite structure for medical training, which realistically mimics the mechanical and optical properties of a live human body part which is either healthy or ailing.

A further object of the present invention is to provide a method for obtainment of such composite structure.

### Brief Description of the Invention

The present invention proposes a composite structure for medical training, comprising a silicone-based main body, and a first layer of silicone-based coating at least partly covering said main body, wherein said silicone-based main body is at least partly in form of foam having an average pore size between 0.1 cm and 1 cm. Also a method for obtainment of such composite structure is provided.

### Brief Explanation of the Figures

The figure brief explanation of which is herewith provided is solely intended for providing a better understanding of the present invention and are as such not intended to define the scope of protection or the context in which said scope is to be interpreted in the absence of the description.

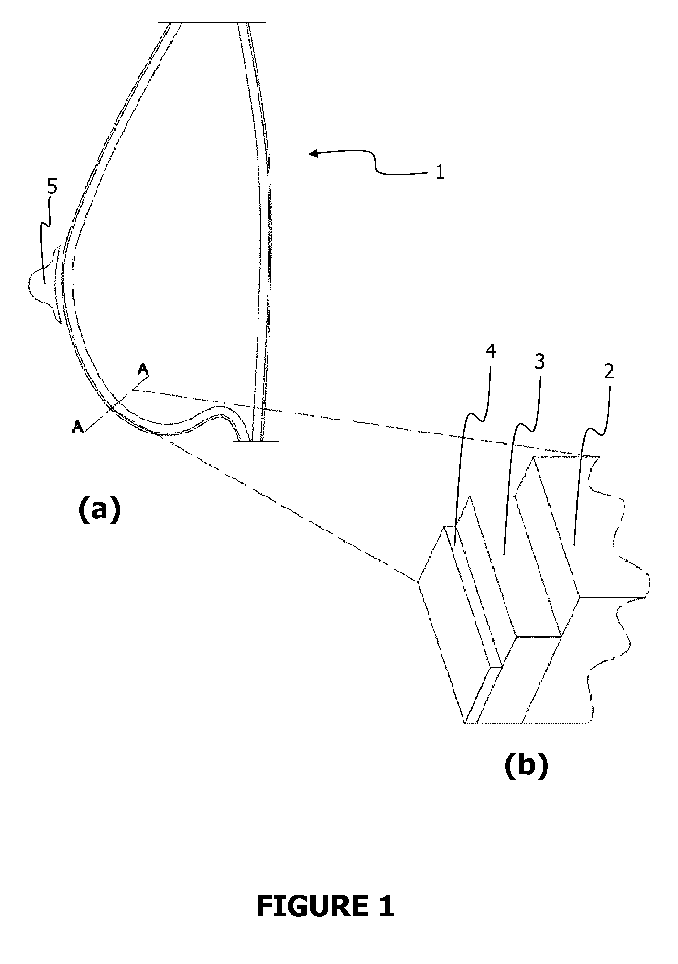

Figure 1 schematically represents (a) a cross-section of a composite structure according to the present invention, and (b) a detail representatively showing layers thereof.

### Detailed Description of the Invention

Artificial human body part according to the present invention is a composite structure for use in medical training including palpation, surgical training e.g. cutting, suturing, etc. Said composite structure is useful for training mainly concerning the surgical removal of tumors/glands/vesicles e.g. breast tumors. The composite structure according to the present invention provides a highly realistic training experience for trainees, in terms of tactile and visual properties of a target body part comprising live human tissues, e.g. a human breast comprising live breast tissues.

Considering the example of human breast, this is achieved by choosing elastomers that exhibit different mechanical properties such as tensile modulus, hardness and elasticity, for mimicking the inner tissues, skin, optionally and preferably nipple, and tumor/gland/vesicle(s) if any. Also introduction of fibrous fabrics into the composite structure renders the structure more realistic in terms of mechanical properties.

The composite structure (1) according to the present invention comprises a silicone-based main body (2), and a first layer (3) of silicone-based coating at least partly covering said main body (2), wherein said silicone-based main body (2) is at least partly in form of foam having an average pore size between 0.1 cm and 1 cm.

Said pore size, which is adjustable by varying the composition and the process conditions during preparation of the main body, strongly affects the mechanical properties of said main body. Thus, said mechanical properties can be precisely adjusted to mimic the target body part e.g. live human breast.

In a preferred embodiment according to the present invention, said composite structure further comprises a silicone-compatible textile layer (4) which at least partly covers said main body, and said textile layer is covered by said first layer (3) of silicone-based coating.

Different compositions and process conditions can mainly be achieved using following aspects:
- varying the crosslinking density of elastomers;
- addition of modifiers, e.g. silicone oil;
- addition of inorganic or metallic agents to change properties such as thermal, electric and flow properties in addition to the mechanical properties of final product;
- and preferably, incorporation of a textile layer into the composite structure.

Textile to be employed in said textile layer (2) is silicone-compatible, which means it is suitable to remain in contact with silicone and/or adhere with silicone in such composite structure, without causing any deformation of said composite structure by involving any physical/chemical reaction with said main body or said first layer (3) of silicone-based coating. Said textile can be selected from random, oriented, woven, non-woven textiles from synthetic and/or natural origin, preferably made of nylon and/or cellulosic fibers, and a mixture thereof.

In a preferred embodiment according to the present invention, said composite structure further comprises one or more object having a higher hardness in comparison with said main body (2). Said object is preferably a polymeric body which serves as a mimic tumor, gland, or vesicle and it is suitable to be sensed by fingers when manually pressed onto the composite structure as it is done at e.g. performance of a routine breast examination, due to its tactile effect, namely it is mechanically different (e.g. harder) than the other constituents of the composite structure (1).

Said object may be located inside said main body (2); and/or as an interlayer between said main body (2) and said textile layer (4), at least partly covering said main body (2). In the latter option, a tumor/gland/vesicle close to the skin can be successfully mimicked.

In case where said composite structure (1) is in form of a human breast, said composite structure preferably comprises at least a further layer (5) of silicone-based coating, which at least partly covers said first layer (4) of silicone-based coating. Said further layer (5) of silicone-based coating preferably has any form and color of a human breast nipple.

A method for obtainment of a composite structure mimicking a human body part for medical training is proposed according to the present invention. Said method comprises the following steps:
a. Obtaining a main mixture comprising silicone elastomer, a curing agent, water, and silicone oil; with an 'elastomer:curing agent' ratio between 20:1 and 5:1,
b. Forming said main mixture in a mold having a shape of a target body part, thus formation of a main body,
c. Curing of said main mixture and thus obtaining a main body at a curing temperature between 60°C and 160°C and for a duration between 2 hours and 24 hours, then separating the main body from the mold,
d. At least partly coating said main body with a coating mixture to form a first layer of silicone-based coating having a thickness of about 1 mm to about 2 mm, such that said textile layer is covered; said coating mixture having a realistic color mimicking live human skin, and said coating mixture comprising colorant and soft silicone rubber having a Shore A hardness with a minimum value higher than 0 and with a maximum value of 50,
e. Curing of said coating layer.

In a preferred variation of the method according to the present invention, the step 'c' is followed by at least partly covering said main body with a textile layer.

In a preferred embodiment according to the present invention, the soft silicone rubber used in said coating mixture comprises Ecoflex™ 10 and/or Ecoflex™ 20 (supplied by Smooth On Inc.), or their equivalents.

In another preferred embodiment according to the present invention, the main mixture of step 'a' comprises at least a colorant for obtaining a realistic color mimicking living inner tissues of a corresponding real human body part. Thus when the composite structure is cut, a visually realistic appearance is obtained inside the main body. Any colorant used in this method is preferably oil-based (hydrophobic), but also hydrophilic pigments and/or dyestuffs can be employed by utilizing suitable surfactants in relevant mixtures, which are available to a person skilled in the art.

In another preferred embodiment according to the present invention, said step 'e' is performed when the temperature of said main body is higher than 30°C, and then curing of said coating layer takes place under ambient temperature. This provides a favorable curing of the coating layer, wherein said coating layer mimics the human skin highly realistically.

In another preferred embodiment according to the present invention, said curing of the coating is performed under temperature between 15°C and 70°C, more preferably under temperature between 40°C and 60°C.

In another preferred embodiment according to the present invention, said mold is an elastic mold of rubber, obtained by molding a live human body part. In a further preferred embodiment according to the present invention, the mold is prepared by application of an elastomer containing mixture, preferably a silicone elastomer containing mixture, which is equivalent of Body Mold™ (supplied by Smooth On, Inc.) on life models; and then placing said elastic mold into a comparatively hard polyethylene supporting mold, for providing supporting during any relevant step(s) of the proposed method according to the present invention. In another preferred embodiment according to the present invention, said mold comprises polypropylene, polystyrene or plaster.

In another preferred embodiment according to the present invention, said method is followed by the following step once or repeatedly:
- Applying a further layer of silicone-based coating at least partly covering said first layer of silicone-based coating, and curing said layer.

When cured, said further layer (5) of silicone-based coating serves for mimicking a human breast nipple, thus it is preferably in any realistic shape and/or of a human breast nipple. This step is useful by obtainment of a composite structure (1) according to the present invention, which mimics a human breast with a nipple having any color and shape.

Said method further comprises introduction of a separately prepared polymeric material having a higher hardness when cured, in comparison with the cured state of said main body, said introduction is performed as one or both of the following steps:
- Introducing said material in its cured state into said main mixture in step 'a' or 'b'; thus obtaining a composite structure with a non-superficial artificial tumor/gland/vesicle,
- Coating the surface of the main body at least partly with said polymeric material in its uncured state, upon said step 'c'; thus obtaining a composite structure with a superficial artificial tumor/gland/vesicle just beneath the skin.

According to the present invention, a system comprising multi-component silicone elastomers, at least one curing agent, silicone oil, is used as a main mixture for preparing said main body (2). Said system preferably further comprises molding silicone.

For adjusting the mechanical properties of the main body (1), the 'elastomer:curing agent' ratio in the main mixture is variable between 20:1 and 5:1 w/w. Evidently, this ratio also affects the processing time, so that at higher values of said ratio (e.g. 20:1), the curing time is longer compared to the curing time at lower values thereof (e.g. 5:1).

In a preferred embodiment, said elastomer is selected from room temperature vulcanizing silicone thermoplastic elastomers or a mixture thereof, which preferably further comprise silica particles; such as a mixture of RTV™ 10 and 20 (supplied by Ravago Petrochemicals), or their equivalents.

In another preferred embodiment, said molding silicone is a multi-component room temperature vulcanizing silicone elastomer, such as RTV™ 2 (supplied by Ravago Petrochemicals) or its equivalent.

Presence of silicone oil also affects the mechanical properties of the main body (2), mainly by enhancing the porosity thereof. Higher fractions of silicone oil in the main mixture result in higher softness of the main body. Preferred fraction of the silicone oil in the composition of the main mixture is from 5% to 40% w/w.

The pore size within the main body (2) can be further adjusted using the water content in the main mixture, since at the curing period of the main mixture, especially in higher temperatures where the vapor pressure of water is higher, water causes formation of bubbles inside the main mixture. This results in formation of pores in the main body, extent of which is thus also proportional with the curing temperature within the preferred temperature interval mentioned above. The water fraction in the main mixture is preferably between 5% and 40% w/w.

In a further preferred embodiment according to the present invention, at the curing step explained in above step 'c', where the main mixture is cured to form the main body, the curing temperature is between 100°C and 130°C. In these conditions, the vapor pressure of the water is near or higher than that at its boiling temperature, and an average pore size up to 1 cm is easily achieved. Said curing temperature is even more preferably between 115°C and 125°C.

Thus, the below objects are achieved by the composite structure according to the present invention and the proposed method for obtainment thereof:
- The above-mentioned shortcomings in the prior art are eliminated,
- A composite structure for medical training, which realistically mimics the mechanical and optical properties of a live human body part which is either healthy or ailing, e.g. an artificial breast with or without artificial tumor/gland/vesicle, without regarding if it is superficial or not, is provided,
- A method for obtainment of such composite structure is provided.

## Claims

1. A composite structure (1) for medical training, wherein said composite structure comprises a silicone-based main body (2), and a first layer (3) of silicone-based coating at least partly covering said main body (2), **characterized in that** said silicone-based main body (2) is at least partly in form of foam having an average pore size between 0.1 cm and 1 cm.

2. A composite structure according to the Claim 1, said composite structure further comprises a silicone-compatible textile layer (4) which at least partly covers said main body, and said textile layer is covered by said first layer (3) of silicone-based coating.

3. A composite structure according to any of the previous claims, wherein said composite structure (1) further comprises one or more object having a higher hardness in comparison with said main body.

4. A composite structure according to Claim 2 and Claim 3, wherein said object is an interlayer between said main body and said textile layer, at least partly covering said main body (2).

5. A composite structure according to the Claim 1, wherein said composite structure comprises a further layer (5) of silicone-based coating, which at least partly covers said first layer (4) of silicone-based coating.

6. A method for obtainment of a composite structure mimicking a human body part for medical training, wherein said method comprises the following steps:
a. Obtaining a main mixture comprising silicone elastomer, a curing agent, water, and silicone oil; with an 'elastomer:curing agent' ratio between 20:1 and 5:1,
b. Forming said main mixture in a mold having a shape of a target body part, thus formation of a main body,
c. Curing of said main mixture and thus obtaining a main body at a curing temperature between 60° and 160°C and for a duration between 2 hours and 24 hours, then separating the main body from the mold,
d. At least partly coating said main body with a coating mixture to form a first layer of silicone-based coating having a thickness of about 1 mm to about 2 mm, such that said textile layer is covered; said coating mixture having a realistic color mimicking live human skin, and said coating mixture comprising colorant and soft silicone rubber having a Shore A hardness with a minimum value higher than 0 and with a maximum value of 50,
e. Curing of said coating layer.

7. A method according to the Claim 6, wherein the step 'c' is followed by at least partly covering said main body with a textile layer.

8. A method according to the Claim 6, wherein said step 'e' is performed when the temperature of said main body is higher than 30°C, followed by curing of said coating layer under ambient temperature.

9. A method according to the Claim 6, wherein said curing of the coating is performed under temperature between 15-70°C.

10. A method according to the Claim 6, said elastomer is selected from room temperature vulcanizing silicone thermoplastic elastomers or a mixture thereof.

11. A method according to the Claim 6, wherein said method is followed by the following step once or repeatedly:
- Applying a further layer of silicone-based coating at least partly covering said first layer of silicone-based coating, and curing said layer.

12. A method according to the Claim 6, wherein said method further comprises introduction of a separately prepared polymeric material having a higher hardness when cured, in comparison with the cured state of said main body, said introduction is performed as one or both of the following steps:
- Introducing said material in its cured state into said main mixture in step 'a' or 'b';
- Coating the surface of said main body, at least partly, with said polymeric material in its uncured state, upon said step 'c'.

13. A method according to the Claim 6, wherein the silicone oil fraction in the main mixture is between 5% and 40% w/w.

14. A method according to the Claim 6, wherein the water fraction in the main mixture is between 5% and 40% w/w.

15. A method according to the Claim 6, wherein said curing temperature in step 'c' is between 100°C and 130°C.
